# EUROPÄISCHE PATENTSCHRIFT

(11) **EP 3 390 872 B1**
(45) Veröffentlichungstag und Bekanntmachung des Hinweises auf die Patenterteilung: **09.03.2022**
(21) Anmeldenummer: 16791527.1
(22) Anmeldetag: 07.11.2016
(51) Int. Cl.: F16K 7/17, B60T 8/36

(54) **VENTILEINHEIT ZUR DRUCKMODULATION IN EINER DRUCKLUFT-BREMSANLAGE**
VALVE UNIT FOR MODULATING PRESSURE IN A COMPRESSED-AIR BRAKE SYSTEM
UNITÉ SOUPAPE POUR LA MODULATION DE PRESSION DANS UN SYSTÈME DE FREINAGE À AIR COMPRIMÉ

(30) Priorität: 15.12.2015 DE 102015016265
(43) Veröffentlichungstag der Anmeldung: 24.10.2018
(73) Patentinhaber: ZF CV Systems Europe BV, 1170 Brussels (BE)
(72) Erfinder: BIALON, Rafal, 55-200 Olawa (PL); TEICHMANN, Andreas, 30916 Isernhagen (DE)
(74) Vertreter: Rabe, Dirk-Heinrich
(86) Internationale Anmeldenummer: PCT/EP2016/001838
(87) Internationale Veröffentlichungsnummer: WO 2017/102043

(56) Entgegenhaltungen:
- EP-A1- 0 498 584
- WO-A1-2010/012425
- DE-A1- 2 821 136
- DE-C2- 2 713 599
- US-B2- 8 672 421

## Beschreibung

Die Erfindung betrifft eine Ventileinheit zur Druckmodulation in einer Druckluft-Bremsanlage, mit einem Einlassventil und einem Auslassventil, die als Membranventile ausgebildet sind, und über die ein Bremsdruckausgang mit einem Bremsdruckeingang oder einem Entlüftungsausgang verbindbar oder gegenüber diesem absperrbar ist, und mit zwei als 3/2-Wege-Magnetventile ausgebildeten Vorsteuerventilen, über die jeweils eine an die Membran des zugeordneten Membranventils angrenzende Steuerkammer über eine Steuerdruckleitung mit einem Steuerdruck beaufschlagbar ist, wobei die Membranventile mit parallelen Betätigungsachsen radial benachbart in einem Ventilgehäuse angeordnet sind, und die Membranen der Membranventile über jeweils einen in eine gehäuseseitige Ringnut eingelegten, axial vorsteuerventilseitig ausgerichteten Ringwulst zwischen zwei Gehäuseteilen eingespannt sind.

In Druckluft-Bremsanlagen von Radfahrzeugen, wie Kraftfahrzeugen und Schienenfahrzeugen, können Ventileinheiten der vorgenannten Bauart als Bremsventil, als Relaisventil und als ABS-Regelventil verwendet werden. Eine derartige Ventileinheit weist ein Einlassventil und ein Auslassventil auf. Mit dem Einlassventil ist ein Bremsdruckausgang, an dem ein Bremskreis oder eine zu einem Radbremszylinder führende Bremsleitung angeschlossen sein kann, wechselweise mit einem Bremsdruckeingang, an dem ein von einem Bremsventil oder einem Relaisventil kommende Bremsleitung angeschlossen sein kann, verbindbar oder gegenüber diesem absperrbar. Mit dem Auslassventil ist der Bremsdruckausgang wechselweise mit einem Entlüftungsausgang verbindbar oder gegenüber diesem absperrbar, der üblicherweise über einen Schalldämpfer in die Umgebung führt.

Aufgrund großer zu schaltender Volumenströme und entsprechend großer zu öffnender sowie zu schließender Strömungsquerschnitte sind das Einlassventil und das Auslassventil häufig als pneumatisch betätigbare Membranventile ausgebildet, die über jeweils ein als 3/2-Wege-Magnetventil ausgebildetes Vorsteuerventil ansteuerbar sind. Ein Membranventil weist eine weitgehend kreisscheibenförmige flexible Membran auf, die an ihrem Rand zumeist mittels eines in eine gehäuseseitige Ringnut eingelegten, axial vorsteuerventilseitig ausgerichteten, also axial dem die Vorsteuerventile enthaltenden Gehäuseteil zugewandten Ringwulstes in dem Ventilgehäuse eingespannt ist.

Auf der axialen Innenseite der Membran, auf der die mit den Drucklufteingängen und Druckluftausgängen verbundenen Strömungskanäle angeordnet sind, sind koaxial zu der Betätigungsachse des jeweiligen Membranventils ein zylindrischer Zentralkanal mit einem der Membran zugewandten kreisrunden Ventilsitz und konzentrisch dazu ein äußerer Ringkanal angeordnet. Auf der axial gegenüberliegenden Außenseite der Membran ist eine Steuerkammer angeordnet, die durch das zugeordnete Vorsteuerventil wechselweise mit einem üblicherweise am Bremsdruckeingang entnommenen hohen Steuerdruck oder mit einem am Entlüftungsausgang oder an anderer Stelle entnommenen, üblicherweise dem Umgebungsdruck entsprechenden niedrigen Steuerdruck beaufschlagbar ist.

Bei einer Beaufschlagung der Steuerkammer mit dem hohen Steuerdruck wird die Membran gegen den Ventilsitz gedrückt, wodurch der Zentralkanal gegenüber dem äußeren Ringkanal abgesperrt wird, was dem geschlossenen Zustand des betreffenden Membranventils entspricht. Bei einer Beaufschlagung der Steuerkammer mit dem niedrigen Steuerdruck wird die durch Formgebung und/oder durch eine Ventilfeder selbsttätig an dem Ventilsitz anliegende Membran durch den in den Strömungskanälen herrschenden Bremsdruck von dem Ventilsitz abgehoben und in Richtung zu der Steuerkammer verschoben, wodurch der Zentralkanal mit dem Ringkanal verbunden wird, was dem geöffneten Zustand des betreffenden Membranventils entspricht.

Hinsichtlich der geometrischen Anordnung der Drucklufteingänge und Druckluftausgänge der als Membranventile ausgebildeten Einlass- und Auslassventile sowie der als Magnetventile ausgebildeten Vorsteuerventile in einem Ventilgehäuse sind Ventileinheiten bekannt, bei denen die Drucklufteingänge und Druckluftausgänge sowie die Membranventile mit parallelen Betätigungsachsen in einem ersten Gehäuseteil angeordnet sind, während die Vorsteuerventile in einem zweiten Gehäuseteil angeordnet sind, und bei denen die Membranen der Membranventile über jeweils einen in eine gehäuseseitige Ringnut eingelegten, axial dem die Vorsteuerventile enthaltenden Gehäuseteil zugewandten Ringwulst zwischen zwei Gehäuseteilen eingespannt sind.

Eine derartige Ventileinheit ist beispielsweise in der US 3 977 734 A beschrieben. Bei dieser bekannten Ventileinheit ist ein Ventilgehäuse mit einer in Einbaulage horizontalen Teilungsebene in ein Gehäuseunterteil und ein Gehäuseoberteil unterteilt. Der Bremsdruckeingang, der Bremsdruckausgang und der Entlüftungsausgang sind in dem Gehäuseunterteil angeordnet. Die Vorsteuerventile sind mit parallel zueinander und senkrecht zu der Teilungsebene ausgerichteten Betätigungsachsen in dem Gehäuseoberteil angeordnet. Die Membranventile sind mit parallelen Betätigungsachsen in dem Gehäuseunterteil angeordnet, wobei die Membranen in einer gemeinsamen, weitgehend der Teilungsebene entsprechenden Membranebene zwischen dem Gehäuseunterteil und dem Gehäuseoberteil eingespannt sind.

Im Gegensatz dazu offenbart DE 2713599 C2 Strömungsmittelpumpen und insbesondere mit einer flexiblen Membran arbeitende Pumpen, welche entweder Flüssigkeiten oder Gase wirksam fördern vermögen. EP0498584 offenbart ein pneumatisches Druckventil.

Außerdem offenbart DE 2821136 A1 ein Doppelmembrankörper für Nutzung in den Schaltventilen von Brems-Blockierschutzanlagen, wobei jede Membran des Doppelmembrankörpers im ausgebauten, spannungslosen Zustand zwischen zwei im Winkel zueinander angeordneten Membranteilen einen im Sinne ihrer Druckbetätigung vorgeformten übergang hat und wobei jede der beiden Membranen mit jeweils der anderen entgegengerichteter Lage zusammengebaut ist.

Bei einer weiteren derartigen, aus der EP 0 498 584 B1 bekannten Ventileinheit ist das Ventilgehäuse mit einer in Einbaulage vertikalen Teilungsebene in ein Eingangsgehäuse und ein Ausgangsgehäuse unterteilt. Der Bremsdruckeingang ist zwar in dem Eingangsgehäuse angeordnet, jedoch über einen Verbindungskanal unmittelbar mit einem in dem Ausgangsgehäuse befindlichen Eingangskanal verbunden. Der Bremsdruckausgang und der Entlüftungsausgang sind unmittelbar in dem Ausgangsgehäuse angeordnet. Die Vorsteuerventile sind mit parallelen Betätigungsachsen in einem Ventilblock zusammengefasst, der abgedichtet in eine Ausnehmung des Eingangsgehäuses eingesetzt ist. Die Membranventile sind mit parallelen Betätigungsachsen in dem Ausgangsgehäuse angeordnet, wobei die Membranen in einer gemeinsamen, weitgehend der Teilungsebene entsprechenden Membranebene zwischen dem Eingangsgehäuse und dem Ausgangsgehäuse eingespannt sind.

Schließlich ist in der US 8 672 421 B2 eine Ventileinheit beschrieben, bei der ein Ventilgehäuse mit in Einbaulage weitgehend horizontalen Teilungsebenen in ein Gehäuseunterteil, ein Gehäuseoberteil und eine dazwischen angeordnete Zwischenplatte unterteilt ist. Der Bremsdruckeingang, der Bremsdruckausgang und der Entlüftungsausgang sind in dem Gehäuseunterteil angeordnet. Die Vorsteuerventile sind mit parallel zueinander und senkrecht zu der Teilungsebene zwischen der Zwischenplatte und dem Gehäuseoberteil ausgerichteten Betätigungsachsen sowie mit gleicher Betätigungsrichtung in dem Gehäuseoberteil angeordnet, wobei die Ventilsitze Bestandteile der Zwischenplatte sind. Die Membranventile sind mit parallelen Betätigungsachsen in dem Gehäuseunterteil angeordnet, wobei die Membranen in einer gemeinsamen, weitgehend der Teilungsebene zwischen dem Gehäuseunterteil und der Zwischenplatte entsprechenden Membranebene zwischen dem Gehäuseunterteil und der Zwischenplatte eingespannt sind.

Die Ringwulste der Membranen weisen in Bezug zu den gehäusefesten Ringnuten üblicherweise ein leichtes Übermaß auf, um eine mechanisch stabile sowie druckdichte Einspannung der Membranen zwischen den betreffenden Gehäuseteilen zu gewährleisten. Durch diese Einspannung wird jedoch das Wulstmaterial der aus einem ElastomerKunststoff bestehenden Membranen zwangsläufig aus der Ringnut nach radial innen verdrängt, was zu lokalen Verdickungen und Ausbeulungen der Membranen führt. Neben möglichen Funktionsstörungen können diese zumeist unregelmäßig auftretenden Verformungen auch zum Einreißen der Membranen und damit zu einem vorzeitigen Defekt der Membranventile führen.

Der Erfindung liegt daher die Aufgabe zugrunde, eine Ventileinheit der eingangs genannten Bauart vorzuschlagen, bei der eine Beschädigung der Membranen durch die Einspannung der Ringwulste weitgehend vermieden wird.

Diese Aufgabe wird durch eine Ventileinheit mit den Merkmalen des Anspruchs 1 gelöst, während vorteilhafte Weiterbildungen in den Unteransprüchen definiert sind.

Die Erfindung geht demnach aus von einer an sich bekannten Ventileinheit zur Druckmodulation in einer Druckluft-Bremsanlage, die ein Einlassventil und ein Auslassventil aufweist, welche als Membranventile ausgebildet sind, und über die ein Bremsdruckausgang mit einem Bremsdruckeingang oder einem Entlüftungsausgang verbindbar oder gegenüber diesem absperrbar ist. Zudem weist die Ventileinheit zwei als 3/2-Wege-Magnetventile ausgebildete Vorsteuerventile auf, über die jeweils eine an die Membran des zugeordneten Membranventils angrenzende Steuerkammer über eine Steuerdruckleitung mit einem Steuerdruck beaufschlagbar und somit das zugeordnete Membranventil betätigbar ist, also geschlossen oder geöffnet wird. Zur Vereinfachung der Herstellung und Montage sind die Membranventile mit parallelen Betätigungsachsen radial benachbart in einem Ventilgehäuse angeordnet und die Membranen der Membranventile sind über jeweils einen in eine gehäuseseitige Ringnut eingelegten, axial vorsteuerventilseitig ausgerichteten Ringwulst zwischen zwei Gehäuseteilen eingespannt.

Zur Lösung der gestellten Aufgabe ist bei dieser Ventileinheit außerdem vorgesehen, dass in der Ringnut oder unmittelbar angrenzend an die Ringnut mindestens eines Membranventils eine ringförmig umlaufende oder abschnittweise unterbrochene Ausnehmung zur Aufnahme von verdrängtem Wulstmaterial der betreffenden Membran angeordnet ist.

Da die Ringwulste der Membranen in Bezug zu den gehäuseseitigen Ringnuten üblicherweise mit geringem Übermaß ausgeführt sind, kann das durch die Einspannung zwischen den Gehäuseteilen verdrängte Wulstmaterial nun in die Ausnehmung ausweichen und wird nicht mehr nach radial innen in den Strömungskanal des jeweiligen Membranventils gedrückt. Somit werden lokale Verdickungen und Ausbeulungen der Membranen, die zum Einreißen der Membranen und damit zu einem vorzeitigen Defekt der Membranventile führen können, mit relativ geringem Aufwand vermieden.

Gemäß einer ersten Ausführungsform, welche nicht ein Teil der Erfindung ist, einer derartigen Ausnehmung ist vorgesehen, dass die radial äußere Seitenwand der jeweiligen Ringnut zur Bildung einer ringförmig umlaufenden Ausnehmung zur Trennebene der angrenzenden Gehäuseteile hin radial nach außen abgewinkelt ausgebildet ist. Diese umlaufende Ausnehmung weist somit eine im Querschnitt dreieckige Kontur auf und ist radial benachbart zu dem Ringwulst der Membran an der Trennebene der Gehäuseteile angeordnet.

Bei einer zweiten Ausführungsform, welche nicht ein Teil der Erfindung ist, einer derartigen Ausnehmung ist vorgesehen, dass die radial äußere Seitenwand und/oder die radial innere Seitenwand der jeweiligen Ringnut zur Bildung einer abschnittsweise unterbrochenen Ausnehmung mit einem Übermaß oder Untermaß ausgeführt sowie mit radial in die Ringnut hineinragenden, umfangsseitig gleichmäßig verteilt angeordneten Axialstegen versehen ist. Der Ringwulst der jeweiligen Membran wird somit radial zwischen den Axialstegen eingespannt, wobei das verdrängte Wulstmaterial umfangsseitig in die jeweiligen Abschnitte der Ausnehmung hinein gedrückt wird.

Um eine möglichst gleichmäßige Einspannung des Ringwulstes der betreffenden Membran zu erreichen, sind die Axialstege bei einer radial beidseitigen Anordnung bevorzugt umfangsseitig versetzt zueinander an der radial äußeren Seitenwand und der radial inneren Seitenwand der Ringnut angeordnet.

Bei einer dritten Ausführungsform, welche nicht ein Teil der Erfindung ist, einer derartigen Ausnehmung ist vorgesehen, dass die radialen Seitenwände und der Nutboden der jeweiligen Ringnut in dem vorsteuerventilseitigen Gehäuseteil angeordnet sind, dass die radialen Seitenwände der Ringnut und die entsprechenden Außenwände des Ringwulstes der betreffenden Membran axial in Richtung des vorsteuerventilseitigen Gehäuseteils konvergent geneigt sind, und dass die axiale Tiefe der Ringnut zur Bildung einer ringförmig umlaufenden Ausnehmung die axiale Höhe des Ringwulstes übersteigt. Diese umlaufende Ausnehmung weist somit eine im Querschnitt trapezförmige Kontur auf und ist axial benachbart zu dem Ringwulst der Membran am Nutboden der Ringnut angeordnet.

Bei den genannten drei Ausführungsformen kann eine zusätzliche Ausnehmung zur Aufnahme von verdrängtem Wulstmaterial dadurch gebildet werden, dass das von den Vorsteuerventilen abgewandte Gehäuseteil jeweils eine einfach abgestufte Randnut aufweist, in deren radial inneren Nutabschnitt eine Stützscheibe für die betreffende Membran eingesetzt ist, und deren radial äußerer Nutabschnitt unter Einschluss der zusätzlichen ringförmig umlaufenden Ausnehmung das steuerseitige Gehäuseteil nahe der Ringnut radial umfasst. Diese zusätzliche umlaufende Ausnehmung weist eine im Querschnitt weitgehend rechteckige Kontur auf und ist radial benachbart zu dem Ringwulst der Membran in der Ecke des äußeren Nutabschnittes der Randnut angeordnet.

Bei einer vierten Ausführungsform, welche nicht ein Teil der Erfindung ist, einer derartigen Ausnehmung ist vorgesehen, dass das von den Vorsteuerventilen abgewandte Gehäuseteil jeweils eine einfach abgestufte Randnut aufweist, in deren radial inneren Nutabschnitt eine Stützscheibe für die betreffende Membran eingesetzt ist, und dessen radial äußerer Nutabschnitt den Ringwulst der Membran axial und radial einseitig umfasst sowie aufgrund einer die Dicke der Stützscheibe unterschreitenden Höhe der radialen Seitenwand des inneren Nutabschnittes eine ringförmig umlaufende Ausnehmung begrenzt. Diese umlaufende Ausnehmung weist eine im Querschnitt weitgehend rechteckige Kontur auf und ist axial benachbart zu dem Ringwulst der Membran zwischen der Ecke des äußeren Nutabschnittes der Randnut und dem radialen Außenrand der Stützscheibe angeordnet.

Bei einer fünften Ausführungsform gemäß der vorliegenden Erfindung einer derartigen Ausnehmung ist vorgesehen, dass das von den Vorsteuerventilen abgewandte Gehäuseteil jeweils eine abgestufte Randnut aufweist, deren radial innerer Nutabschnitt die Stützscheibe für die betreffende Membran bündig aufnimmt, und deren benachbarter radial äußerer Nutabschnitt den Ringwulst der Membran axial und radial einseitig umfasst sowie eine ringförmig umlaufende radiale Ausnehmung begrenzt. Diese umlaufende Ausnehmung weist somit eine im Querschnitt weitgehend rechteckige Kontur auf und ist radial benachbart zu dem Ringwulst der Membran in der Ecke des benachbarten Nutabschnittes der Randnut angeordnet.

Zur Herstellung der umlaufenden Ausnehmung kann vorgesehen sein, dass die Randnut einfach abgestuft ausgebildet ist, und dass die ringförmig umlaufende radiale Ausnehmung durch eine in der radialen Seitenwand des radial äußeren Nutabschnittes der Randnut angeordnete, beispielsweise durch Ausdrehen hergestellte Radialnut gebildet ist.

Alternativ dazu kann die umlaufende Ausnehmung auch dadurch hergestellt sein, dass die Randnut zweifach abgestuft ausgebildet ist, und dass die ringförmig umlaufende radiale Ausnehmung dadurch gebildet ist, dass ein zylindrischer Ring in den äußeren Nutabschnitt der Randnut eingelegt ist, der die radiale Seitenwand des mittleren Nutabschnittes der Randnut radial nach innen überragt.

Zur Verstärkung der Einspannung der Membranen und zur Verhinderung einer Verdrängung von Wulstmaterial nach radial innen, also in den Strömungskanal oder in die Steuerkammer des jeweiligen Membranventils hinein, kann das steuerseitige Gehäuseteil bei allen genannten Ausführungsformen angrenzend an die radial innere Seitenwand der jeweiligen Ringnut mit einem im Querschnitt keilförmigen, zur Ringnut hin ansteigenden ringförmigen Klemmsteg versehen sein.

Zur weiteren Verdeutlichung der Erfindung ist der Beschreibung eine Zeichnung mit mehreren Ausführungsbeispielen beigefügt. In diesen zeigt
Fig. 1 eine erste Ausführungsform, welche nicht ein Teil der Erfindung ist, zur Fixierung der Membran eines Membranventils in einem vergrößerten Ausschnitt,
Fig. 2a eine zweite Ausführungsform, welche nicht ein Teil der Erfindung ist, zur Fixierung der Membran eines Membranventils in einem vergrößerten Ausschnitt,
Fig. 2b eine ausschnittweise Axialansicht auf eine Zwischenplatte einer Ventileinheit im Bereich eines Membranventils mit der zweiten Ausführungsform, welche nicht ein Teil der Erfindung ist, zur Fixierung der Membran gemäß Fig. 2a,
Fig. 3 eine Weiterbildung der zweiten Ausführungsform zur Fixierung der Membran eines Membranventils gemäß Fig. 2a und Fig. 2b in einem vergrößerten Ausschnitt,
Fig. 4 eine dritte Ausführungsform, welche nicht ein Teil der Erfindung ist, zur Fixierung der Membran eines Membranventils in einem vergrößerten Ausschnitt,
Fig. 5 eine vierte Ausführungsform zur Fixierung der Membran eines Membranventils in einem vergrößerten Ausschnitt,
Fig. 6 eine erste Variante einer fünften Ausführungsform gemäßer der vorliegenden Erfindung zur Fixierung der Membran eines Membranventils in einem vergrößerten Ausschnitt,
Fig. 7 eine zweite Variante der fünften Ausführungsform gemäß der vorliegenden Erfindung zur Fixierung der Membran eines Membranventils in einem vergrößerten Ausschnitt,
Fig. 8 eine erste Ausführungsform, welche nicht ein Teil der Erfindung ist, einer zwei Membranventile umfassenden Ventileinheit in einem vertikalen Längsschnitt,
Fig. 8a die erste Ausführungsform , welche nicht ein Teil der Erfindung ist, der Ventileinheit gemäß Fig. 8 in einem vergrößerten Ausschnitt,
Fig. 9 eine zweite Ausführungsform einer zwei Membranventile umfassenden Ventileinheit in einem vertikalen Längsschnitt, und
Fig. 9a die zweite Ausführungsform, welche nicht ein Teil der Erfindung ist, der Ventileinheit gemäß Fig. 9 in einem vergrößerten Ausschnitt.

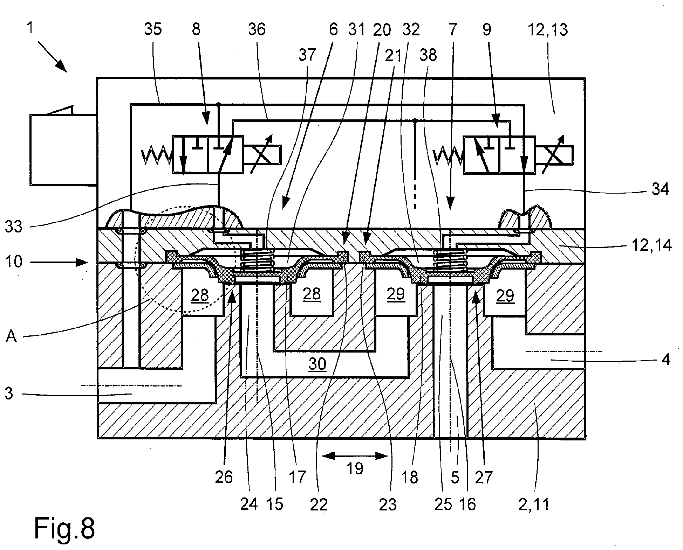

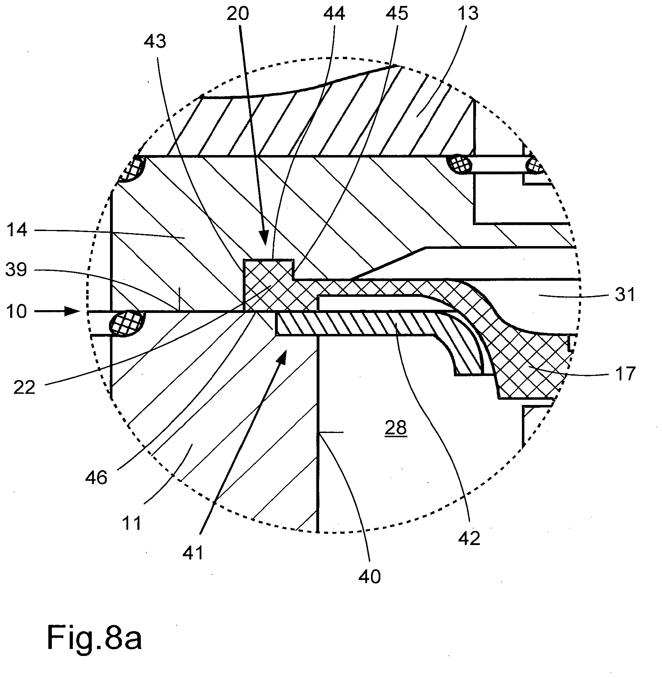

Eine erste nicht erfindungsgemäße Ausführungsform einer weitgehend bekannten Ventileinheit 1 ist demnach in Fig. 8 in einem vertikalen Längsschnitt abgebildet. In einem länglichen Ventilgehäuse 2 sind ein Bremsdruckeingang 3, ein Bremsdruckausgang 4, ein Entlüftungsausgang 5 sowie ein als Membranventil ausgebildetes Einlassventil 6, ein als Membranventil ausgebildetes Auslassventil 7 und jeweils ein als 3/2-Wege-Magnetventil ausgebildetes Vorsteuerventil 8, 9 für jedes Membranventil 6, 7 angeordnet. Das Ventilgehäuse 2 ist mit einer in Einbaulage weitgehend horizontalen Teilungsebene 10 in ein Basisgehäuse 11 und einen Gehäusedeckel 12 unterteilt. Der Gehäusedeckel 12 umfasst eine die Magnetventile 8, 9 enthaltende Steuereinheit 13 und eine zwischen dem Basisgehäuse 11 und der Steuereinheit 13 angeordnete Zwischenplatte 14. Die Steuereinheit 13 und die Zwischenplatte 14 können miteinander verschraubt, verrastet oder in anderer Weise miteinander verbunden sein. Der so gebildete Gehäusedeckel 12 kann einheitlich mit dem Basisgehäuse 11 verbunden, insbesondere verschraubt sein. Es ist jedoch auch möglich, dass die Steuereinheit 13 und die Zwischenplatte 14 separat mit dem Basisgehäuse verbunden sind.

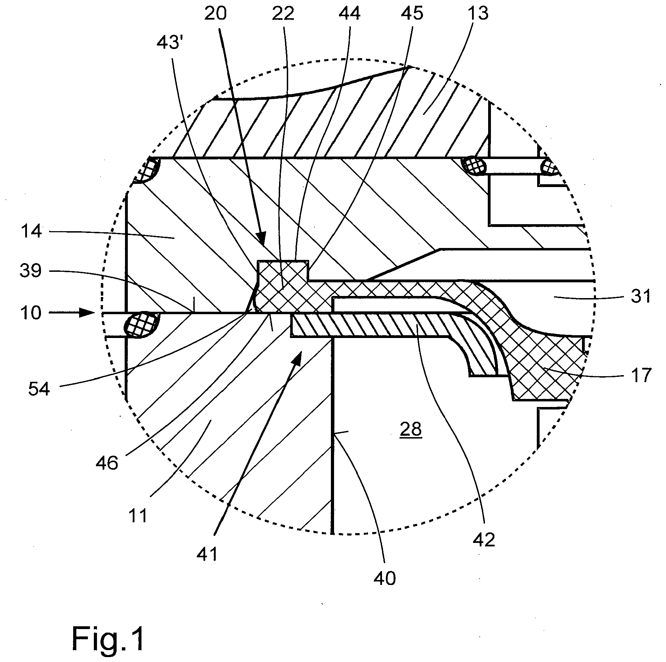

Der Bremsdruckeingang 3 und der Bremsdruckausgang 4 sind in Längsrichtung 19 des Ventilgehäuses 2 mit horizontaler Ausrichtung weitgehend axial gegenüberliegend und der Entlüftungsausgang 5 dazwischen vertikal nach unten gerichtet in dem Basisgehäuse 11 angeordnet. Die beiden Membranventile 6, 7 sind in dem Basisgehäuse 11 zwischen dem Bremsdruckeingang 3 und dem Bremsdruckausgang 4 mit parallelen Betätigungsachsen 15, 16 in Längsrichtung 19 hintereinander angeordnet. Die Membranen 17, 18 der Membranventile 6, 7 sind in einer gemeinsamen, weitgehend der Teilungsebene 10 zwischen dem Basisgehäuse 11 und der Zwischenplatte 14 entsprechenden Membranebene angeordnet sowie über jeweils einen in eine gehäuseseitige Ringnut 20, 21 eingelegten, axial vorsteuerventilseitig ausgerichteten Ringwulst 22, 23 zwischen dem Basisgehäuse 11 und der Zwischenplatte 14 eingespannt. Die in Fig. 1 nur schematisch dargestellten Vorsteuerventile 8, 9 sind vollständig in der Steuereinheit 13 des Gehäusedeckels 12 angeordnet.

Die Membranventile 6, 7 weisen innerhalb des Basisgehäuses 11 koaxial zu den Betätigungsachsen 15, 16 jeweils einen zylindrischen Zentralkanal 24, 25 mit einem der jeweiligen Membran 17, 18 zugewandten kreisrunden Ventilsitz 26, 27 und einen konzentrisch dazu angeordneten radial äußeren Ringkanal 28, 29 auf. Der Ringkanal 28 des Einlassventils 6 ist unmittelbar mit dem Bremsdruckeingang 3 verbunden. Der Zentralkanal 24 des Einlassventils 6 steht über einen Verbindungskanal 30 mit dem Ringkanal 29 des Auslassventils 7 in Verbindung, der seinerseits unmittelbar mit dem Bremsdruckausgang 4 in Verbindung steht. Der Zentralkanal 25 des Auslassventils 7 ist unmittelbar mit dem Entlüftungsausgang 5 verbunden.

Auf der dem Gehäusedeckel 12 axial zugewandten Außenseite der Membranen 17, 18 ist jeweils eine Steuerkammer 31, 32 ausgebildet, in die jeweils mittig eine Steuerdruckleitung 33, 34 einmündet. Über die Steuerdruckleitungen 33, 34 sind die Steuerkammern 31, 32 der Membranventile 6, 7 durch das jeweils zugeordnete Vorsteuerventil 8, 9 wechselweise mit einem über eine Steuerdruckleitung 35 am Bremsdruckeingang 3 entnommenen hohen Steuerdruck oder mit einem über eine Steuerdruckleitung 36 am Entlüftungsausgang 5 oder an anderer Stelle entnommenen, dem Umgebungsdruck entsprechenden niedrigen Steuerdruck beaufschlagbar.

Durch jeweils eine in jeder Steuerkammer 31, 32 angeordnete Ventilfeder 37, 38 werden die Membranen 17, 18 im lastfreien Ruhezustand der Ventileinheit 1 gegen den zugeordneten Ventilsitz 26, 27 gedrückt, was dem geschlossenen Zustand der Membranventile 6, 7 entspricht. Bei Beaufschlagung der jeweiligen Steuerkammer 31, 32 mit dem hohen Steuerdruck wird die betreffende Membran 17, 18 auf den zugeordneten Ventilsitz 26, 27 gedrückt, wodurch das betreffende Membranventil 6, 7 belastbar geschlossen ist. Bei einer Beaufschlagung der jeweiligen Steuerkammer 31, 32 mit dem niedrigen Steuerdruck kann die betreffende Membran 17, 18 durch den in den angrenzenden Strömungskanälen 24, 28; 25, 29 vorliegenden Bremsdruck von dem Ventilsitz 26, 27 weggedrückt werden, wodurch das betreffende Membranventil 6, 7 geöffnet ist.

Die Ventileinheit 1 weist die Schaltfunktionen "Druck erhöhen", "Druck halten" und "Druck absenken" auf. In der Schaltfunktion "Druck erhöhen" sind das Einlassventil 6 geöffnet und das Auslassventil 7 geschlossen, so dass der über ein Bremsventil oder ein Relaisventil an dem Bremsdruckeingang 3 eingesteuerte Bremsdruck unverändert an den Bremsdruckausgang 4 sowie an den daran angeschlossenen Bremskreis oder Radbremszylinder weitergeleitet wird. Da die Schaltfunktion "Druck erhöhen" dem Ruhezustand der Ventileinheit 1 entspricht, verbindet das Vorsteuerventil 8 des Einlassventils 6 im unbestromten Zustand seiner Magnetspule die Steuerkammer 31 des Einlassventils 6 mit der den niedrigen Steuerdruck führenden Steuerdruckleitung 36. Ebenso verbindet das Vorsteuerventil 9 des Auslassventils 7 im unbestromten Zustand seiner Magnetspule die Steuerkammer 32 des Auslassventils 7 mit der den hohen Steuerdruck führenden Steuerdruckleitung 35.

In der Schaltfunktion "Druck halten" der Ventileinheit 1 sind das Einlassventil 6 und das Auslassventil 7 geschlossen, so dass der am Bremsdruckausgang 4 und dem daran angeschlossenen Bremskreis oder Radbremszylinder anliegende Bremsdruck konstant gehalten wird. Zur Einstellung dieser Schaltfunktion wird nur das Vorsteuerventil 8 des Einlassventils 6 durch Bestromung seiner Magnetspule umgeschaltet und damit die Steuerkammer 31 des Einlassventils 6 mit dem hohen Steuerdruck beaufschlagt.

In der Schaltfunktion "Druck absenken" der Ventileinheit 1 sind das Einlassventil 6 geschlossen und das Auslassventil 7 geöffnet, so dass der Bremsdruckausgang 4 und der daran angeschlossene Bremskreis oder Radbremszylinder dann entlüftet werden. Zur Einstellung dieser Schaltfunktion werden beide Vorsteuerventile 8, 9 durch Bestromung ihrer Magnetspulen umgeschaltet und damit die Steuerkammer 31 des Einlassventils 6 mit dem hohen Steuerdruck und die Steuerkammer 32 des Auslassventils 7 mit dem niedrigen Steuerdruck beaufschlagt.

Die Schaltfunktionen "Druck halten" und "Druck absenken" der Ventileinheit 1 sind auch Blockierschutzfunktionen, mit denen bei einer Verwendung der Ventileinheit 1 als ABS-Regelventil eine Antiblockiersystems ein bremsbedingtes Blockieren des zugeordneten Rades verhindert werden kann. Die Blockierschutzfunktionen werden durch eine entsprechende Ansteuerung der Vorsteuerventile von einem ABS-Steuergerät gesteuert, in dem die Signale von Raddrehzahlsensoren zur Erkennung eines bevorstehenden oder schon eingetretenen Blockierens der gebremsten Räder ausgewertet werden.

In dem in Fig. 8a vergrößert abgebildeten Ausschnitt A aus Fig. 8 ist gut erkennbar, dass das Basisgehäuse 11 am Übergang zwischen der in der Trennebene 10 liegenden Außenwand 39 und der radial äußeren Innenwand 40 des Ringkanals 28 eine einfache Randnut 41 aufweist, in die eine Stützscheibe 42 der betreffenden Membran 17 eingesetzt ist. Die den Ringwulst 22 der Membran 17 aufnehmende Ringnut 20 ist vollständig in der Zwischenplatte 14 angeordnet und durch eine radial äußere Seitenwand 43, einen axialen Nutboden 44, und eine radial innere Seitenwand 45 begrenzt. Die Trennebene 10 zwischen dem Basisgehäuse 11 und der Zwischenplatte 14 schließt am Basisgehäuse 11 axial bündig mit der Stützscheibe 42 und an der Zwischenplatte 14 axial bündig mit dem Außenrand 46 der Membran 17 ab.

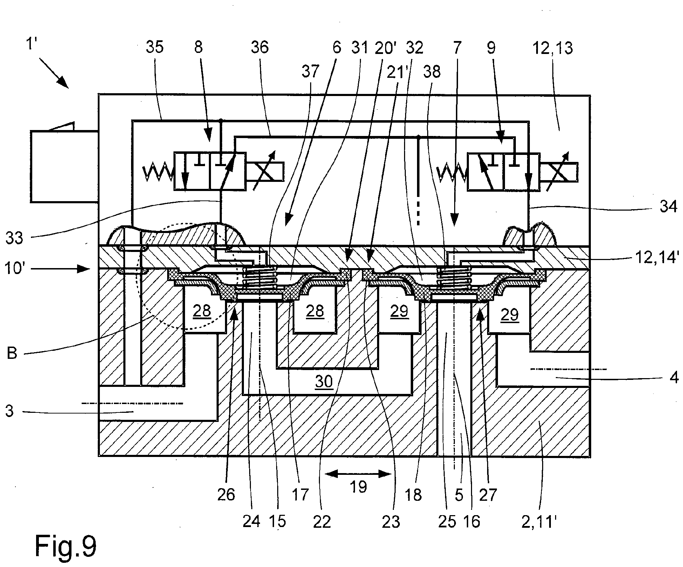

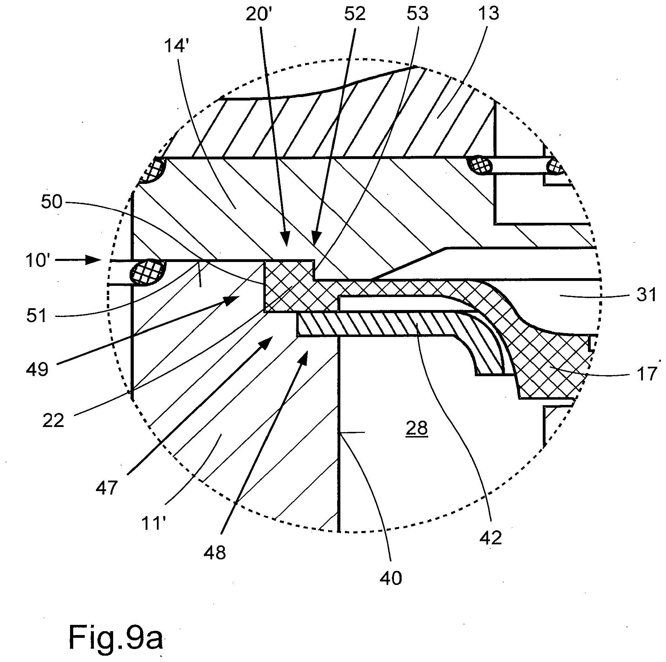

Eine in Fig. 9 in einem vertikalen Längsschnitt abgebildete zweite Ausführungsform einer weitgehend bekannten Ventileinheit 1' unterscheidet sich bei prinzipiell gleichem Aufbau und gleicher Funktionsweise von der ersten Ausführungsform der Ventileinheit 1 gemäß Fig. 8 durch eine axial versetzte Lage der Trennebene 10' zwischen dem Basisgehäuse 11' und der Zwischenplatte 14'.

In dem in Fig. 9a vergrößert abgebildeten Ausschnitt B aus Fig. 9 ist gut erkennbar, dass das Basisgehäuse 11' am Übergang zwischen der Trennebene 10' und der radial äußeren Innenwand 40 des Ringkanals 28 nun eine einfach abgestufte Randnut 47 aufweist, in deren radial inneren Nutabschnitt 48 eine Stützscheibe 42 der betreffenden Membran 17 eingesetzt ist. Die den Ringwulst 22 der Membran 17 aufnehmende Ringnut 20' wird nun radial außen von der radialen Seitenwand 50 des äußeren Nutabschnittes 49 der Randnut 47 begrenzt, weiter axial vorsteuerventilseitig von der in der Trennebene 10' liegenden Außenwand 51 der Zwischenplatte 14' begrenzt, und außerdem radial innen von einer durch einen axialen Absatz 52 gebildeten radialen Seitenwand 53 der Zwischenplatte 14' begrenzt.

Da die Ringwulste 22, 23 der Membranen 17, 18 gegenüber den gehäusefesten Ringnuten 20, 21; 20', 21' üblicherweise ein leichtes Übermaß aufweisen, wird das Wulstmaterial der Membranen 17, 18 durch die Einspannung zwischen dem Basisgehäuse 11, 11' und der Zwischenplatte 14, 14' nach radial innen verdrängt, was zu lokalen Verdickungen und Ausbeulungen der Membranen 17, 18 führt. Neben möglichen Funktionsstörungen der Membranventile 6, 7 können diese zumeist unregelmäßig auftretenden Verformungen auch zum Einreißen der Membranen 17, 18 und damit zu einem vorzeitigen Defekt der Membranventile 6, 7 führen.

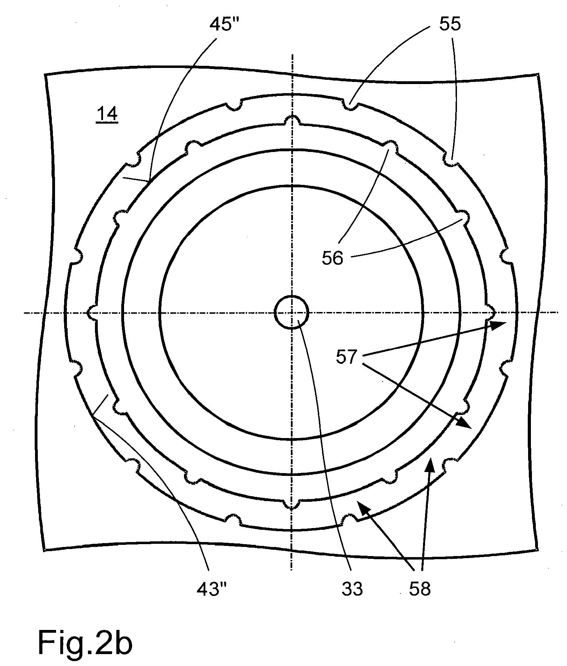

Zur Vermeidung einer Beschädigung der Membranen 17, 18 durch die Einspannung derer Ringwulste 22, 23 ist erfindungsgemäß vorgesehen, dass in der Ringnut 20, 21; 20', 21' oder unmittelbar angrenzend an die Ringnut 20, 21; 20', 21' mindestens eines Membranventils 6, 7 eine ringförmig umlaufende oder abschnittsweise unterbrochene Ausnehmung zur Aufnahme von verdrängtem Wulstmaterial der betreffenden Membran 17, 18 angeordnet beziehungsweise ausgebildet ist. In den nachfolgend beschriebenen Figuren 1 bis 7a sind verschiedene Ausführungsformen derartiger Ausnehmungen jeweils in vergrößerten Ausschnitten von vertikalen Längsschnitten der Ventileinheiten 1, 1' und in Fig. 2b in einer ausschnittweisen Axialansicht der Zwischenplatte 14 dargestellt.

In einer ersten nicht erfindungsgemäßen Ausführungsform gemäß Fig. 1 ist die radial äußere Seitenwand 43' der Ringnut 20 zur Bildung einer ringförmig umlaufenden Ausnehmung 54 zur Trennebene 10 der angrenzenden Gehäuseteile 11, 14 hin radial nach außen abgewinkelt ausgebildet. Die so erzeugte umlaufende Ausnehmung 54 weist demnach eine im Querschnitt keilförmige Kontur auf.

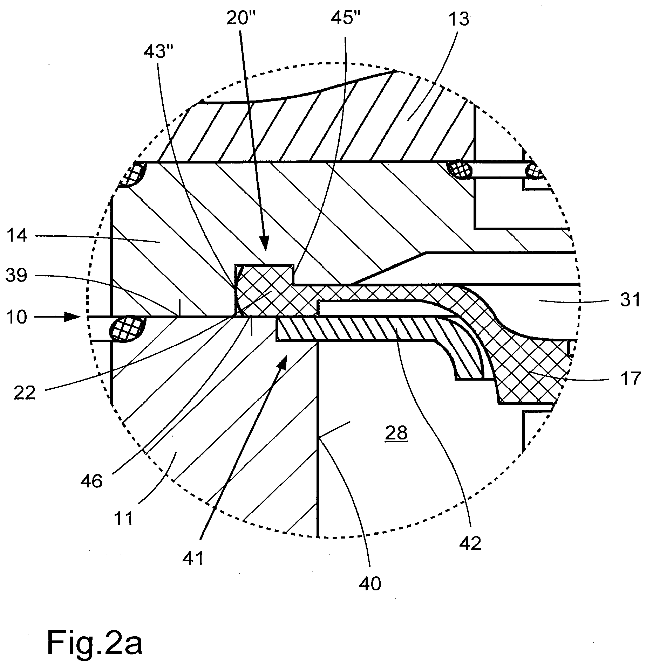

In einer zweiten nicht erfindungsgemäßen Ausführungsform gemäß den Figuren 2a und 2b sind die radial äußere Seitenwand 43" und die radial innere Seitenwand 45" der Ringnut 20" zur Bildung einer abschnittsweise unterbrochenen Ausnehmung 57, 58 mit einem Übermaß beziehungsweise einem Untermaß ausgeführt und mit radial in die Ringnut 20" hineinragenden, umfangsseitig gleichmäßig verteilt angeordneten Axialstegen 55, 56 versehen. Wie der Axialansicht von Fig. 2b zu entnehmen ist, sind die Axialstege 55, 56 umfangsseitig versetzt zueinander an der radial äußeren Seitenwand 43" und der radial inneren Seitenwand 45" der Ringnut 20" angeordnet.

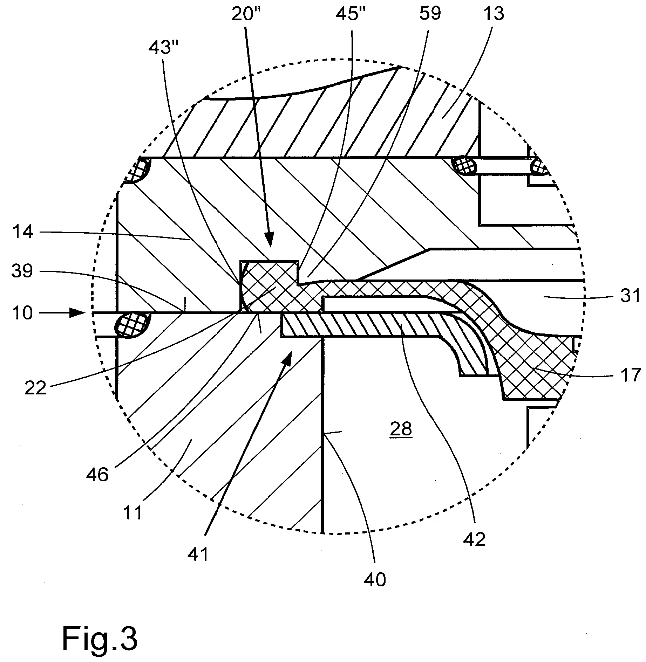

In einer beispielhaften Weiterbildung der zweiten nicht erfindungsgemäßen Ausführungsform gemäß Fig. 3 ist die Zwischenplatte 14 angrenzend an die radial innere Seitenwand 45" der Ringnut 20" mit einem im Querschnitt keilförmigen, zur Ringnut 20" hin axial ansteigenden ringförmigen Klemmsteg 59 versehen. Durch die Ausbildung und Anordnung des bei allen Ausführungsformen anwendbaren Klemmsteges 59 soll die Einspannung der Membran 17 zwischen den Gehäuseteilen 11, 14 verstärkt und eine Verdrängung von Wulstmaterial nach radial innen, also in den benachbart angeordneten Ringkanal 28 oder in die benachbart angeordnete Steuerkammer 31 des Membranventils 6 verhindert werden.

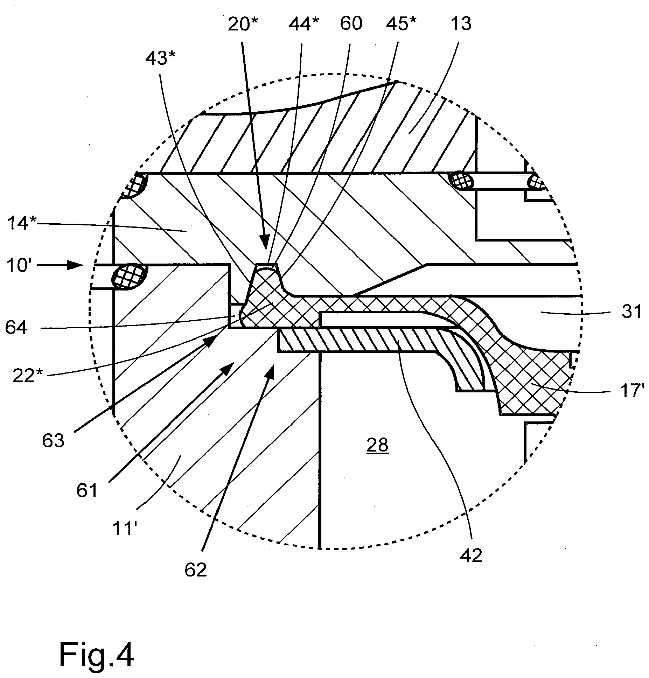

In einer dritten nicht erfindungsgemäßen Ausführungsform gemäß Fig. 4 sind die radialen Seitenwände 43*, 45* und der Nutboden 44* der Ringnut 20* in der Zwischenplatte 14* angeordnet. Die radialen Seitenwände 43*, 45* der Ringnut 20* und die entsprechenden Außenwände des Ringwulstes 22* der Membran 17' sind axial in Richtung zu der Zwischenplatte 14* konvergent geneigt. Zur Bildung einer ringförmig umlaufenden Ausnehmung 60 übersteigt die axiale Tiefe der Ringnut 20* die axiale Höhe des Ringwulstes 22* der Membran 17'. Durch die keilförmige Ausbildung der Ringnut 20* und des Ringwulstes 22* wird die Einspannung der Membran 17' zwischen den Gehäuseteilen 11', 14* verstärkt sowie überschüssiges Wulstmaterial der Membran 17' in die bodenseitige Ausnehmung 60 gedrückt.

Zur Bildung einer zusätzlichen umlaufenden Ausnehmung 64 zur Aufnahme von Wulstmaterial der Membran 17' ist beispielhaft in der nicht erfindungsgemäßen Ausführungsform gemäß Fig. 4 vorgesehen, dass das Basisgehäuse 11' eine einfach abgestufte Randnut 61 aufweist, in deren radial inneren Nutabschnitt 62 die Stützscheibe 42 der Membran 17' eingesetzt ist, und deren radial äußerer Nutabschnitt 63 unter Einschluss der zusätzlichen ringförmig umlaufenden Ausnehmung 64 einen axialen Abschnitt der Zwischenplatte 14* nahe der Ringnut 20* radial umgreift. Bei entsprechender Verschiebung der Trennebene 10 zwischen den beiden Gehäuseteilen 11, 14 kann die zusätzliche umlaufende Ausnehmung 64 auch bei den vorbeschriebenen nicht erfindungsgemäßen Ausführungen gemäß Fig. 1 bis Fig. 3 vorgesehen sein.

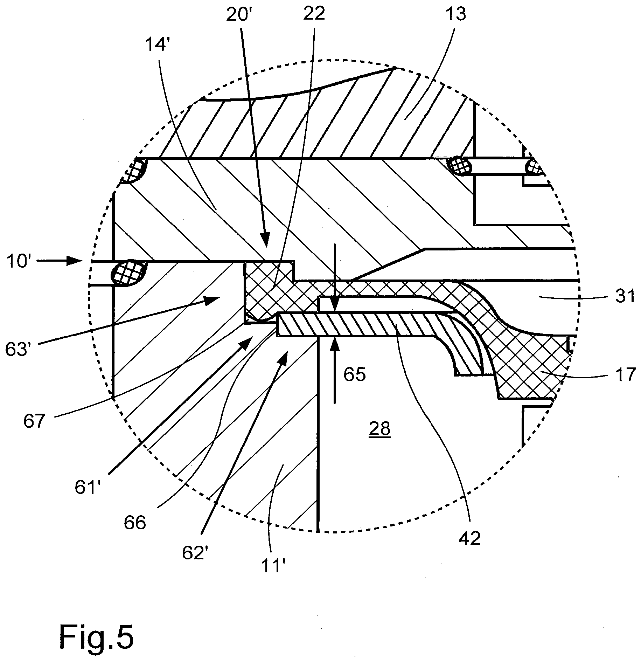

In einer vierten nicht erfindungsgemäßen Ausführungsform gemäß Fig. 5 weist das Basisgehäuse 11' ebenfalls eine einfach abgestufte Randnut 61' auf, in deren radial inneren Nutabschnitt 62' die Stützscheibe 42 der Membran 17 eingesetzt ist, und dessen radial äußerer Nutabschnitt 63' den Ringwulst 22 der Membran 17 axial und radial einseitig umfasst sowie aufgrund einer die Dicke 65 der Stützscheibe 42 unterschreitenden Höhe der radialen Seitenwand 66 des inneren Nutabschnittes 62' eine ringförmig umlaufende Ausnehmung 67 begrenzt. Die so erzeugte umlaufende Ausnehmung 67 weist demzufolge eine im Querschnitt rechteckige Kontur auf.

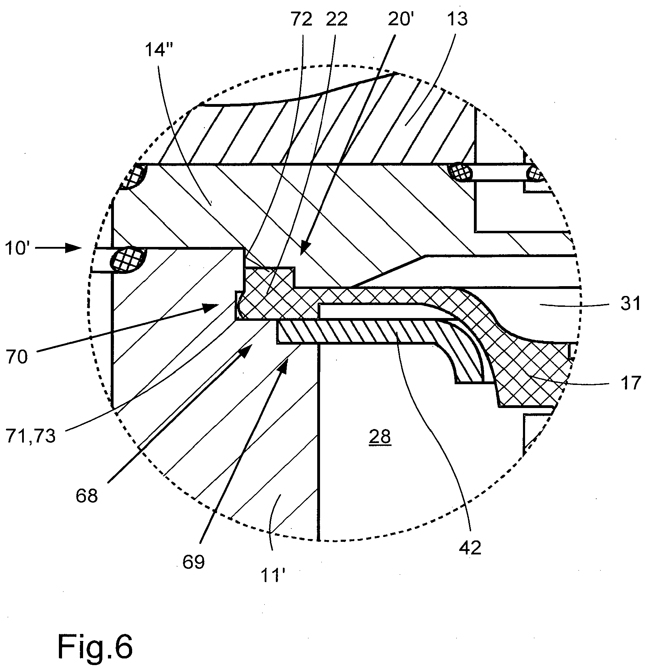

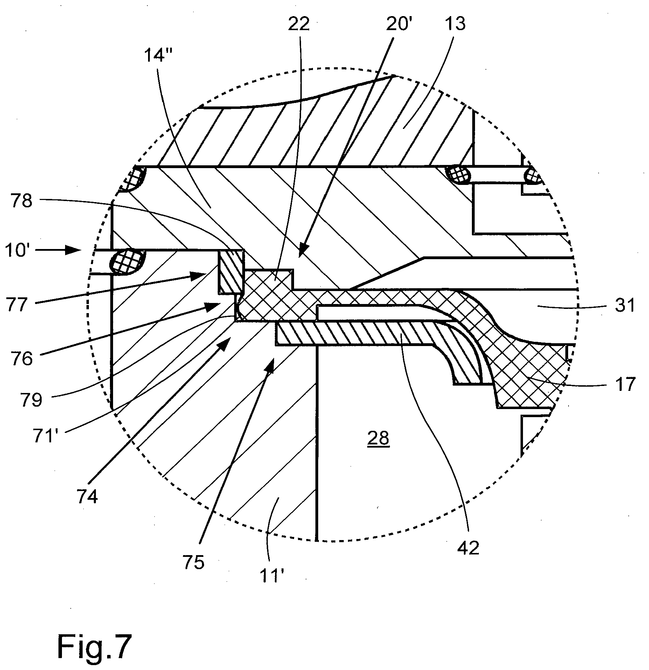

In einer in Fig. 6 in einer ersten Variante und in Fig. 7 in einer zweiten Variante abgebildeten fünften Ausführungsform gemäß der vorliegenden Erfindung ist vorgesehen, dass das Basisgehäuse 11' eine abgestufte Randnut 68, 74 aufweist, deren radial innerer Nutabschnitt 69, 75 die Stützscheibe 42 der Membran 17 bündig aufnimmt, und deren benachbarter radial äußerer Nutabschnitt 70, 76 den Ringwulst 22 der Membran 17 axial sowie radial einseitig umfasst und eine ringförmig umlaufende radiale Ausnehmung 71, 71' begrenzt.

In der ersten Variante gemäß Fig. 6 ist die Randnut 68 des Basisgehäuses 11' einfach abgestuft, und die ringförmig umlaufende radiale Ausnehmung 71 ist durch eine in der Seitenwand 72 des radial äußeren Nutabschnittes 70 der Randnut 68 angeordnete Radialnut 73 gebildet. Die Radialnut 73 kann zum Beispiel durch Ausdrehen hergestellt sein.

In der zweiten Variante gemäß Fig. 7 ist die Randnut 74 des Basisgehäuses 11' zweifach abgestuft, und die ringförmig umlaufende radiale Ausnehmung 71' ist dadurch gebildet, dass ein zylindrischer Ring 78 in denjenigen radial äußeren Nutabschnitt 77 der Randnut 74 eingelegt ist, welcher die radiale Seitenwand 79 des mittleren Nutabschnittes 76 der Randnut 74 radial nach innen überragt. Im Vergleich zu der vorherigen Variante ist die umlaufende Ausnehmung 71' nun einfacher herstellbar, weist jedoch aufgrund des erforderlichen Rings 78 den Nachteil eines zusätzlichen Bauteils auf.

### Bezugszeichenliste (Bestandteil der Beschreibung)

- 1, 1': Ventileinheit
- 2: Ventilgehäuse
- 3: Bremsdruckeingang
- 4: Bremsdruckausgang
- 5: Entlüftungsausgang
- 6: Einlassventil, Membranventil
- 7: Auslassventil, Membranventil
- 8: Vorsteuerventil von Einlassventil 6, Magnetventil
- 9: Vorsteuerventil von Auslassventil 7, Magnetventil
- 10, 10': Teilungsebene
- 11, 11': Basisgehäuse
- 12: Gehäusedeckel
- 13: Steuereinheit
- 14, 14': Zwischenplatte
- 14": Zwischenplatte
- 14*: Zwischenplatte
- 15: Betätigungsachse von Einlassventil 6
- 16: Betätigungsachse von Auslassventil 7
- 17, 17': Membran von Einlassventil 6
- 18: Membran von Auslassventil 7
- 19: Längsrichtung
- 20, 20": Ringnut in Zwischenplatte 14
- 20': Ringnut in Zwischenplatte 14'
- 20*: Ringnut in Zwischenplatte 14*
- 21: Ringnut in Zwischenplatte 14
- 21': Ringnut in Zwischenplatte 14'
- 22: Ringwulst von Membran 17
- 22*: Ringwulst von Membran 17'
- 23: Ringwulst von Membran 18
- 24: Zentralkanal von Einlassventil 6
- 25: Zentralkanal von Auslassventil 7
- 26: Ventilsitz von Einlassventil 6
- 27: Ventilsitz von Auslassventil 7
- 28: Ringkanal von Einlassventil 6
- 29: Ringkanal von Auslassventil 7
- 30: Verbindungskanal
- 31: Steuerkammer von Einlassventil 6
- 32: Steuerkammer von Auslassventil 7
- 33: Steuerdruckleitung von Einlassventil 6
- 34: Steuerdruckleitung von Auslassventil 7
- 35: Steuerdruckleitung von Vorsteuerventil 8, 9
- 36: Steuerdruckleitung von Vorsteuerventil 8, 9
- 37: Ventilfeder von Einlassventil 6
- 38: Ventilfeder von Auslassventil 7
- 39: Außenwand von Basisgehäuse 11
- 40: Innenwand von Ringkanal 28
- 41: Randnut von Basisgehäuse 11
- 42: Stützscheibe von Membran 17, 17'
- 43, 43': Äußere Seitenwand von Ringnut 20
- 43": Äußere Seitenwand von Ringnut 20"
- 43*: Äußere Seitenwand von Ringnut 20*
- 44: Nutboden von Ringnut 20
- 44*: Nutboden von Ringnut 20*
- 45': Innere Seitenwand von Ringnut 20
- 45": Innere Seitenwand von Ringnut 20"
- 45*: Innere Seitenwand von Ringnut 20*
- 46: Außenrand von Membran 17
- 47: Randnut von Basisgehäuse 11'
- 48: Innerer Nutabschnitt von Randnut 47
- 49: Äußerer Nutabschnitt von Randnut 47
- 50: Seitenwand von Nutabschnitt 20', 49
- 51: Außenwand von Zwischenplatte 14'
- 52: Axialer Absatz von Zwischenplatte 14'
- 53: Seitenwand von Zwischenplatte 14', 20'
- 54: Umlaufende Ausnehmung
- 55: Axialsteg von Seitenwand 43"
- 56: Axialsteg von Seitenwand 45"
- 57: Unterbrochene Ausnehmung
- 58: Unterbrochene Ausnehmung
- 59: Klemmsteg
- 60: Umlaufende Ausnehmung
- 61, 61': Randnut von Basisgehäuse 11'
- 62: Innerer Nutabschnitt von Randnut 61
- 62': Innerer Nutabschnitt von Randnut 61'
- 63: Äußerer Nutabschnitt von Randnut 61
- 63': Äußerer Nutabschnitt von Randnut 61'
- 64: Umlaufende Ausnehmung
- 65: Dicke von Stützscheibe 42
- 66: Seitenwand von Nutabschnitt 62'
- 67: Umlaufende Ausnehmung
- 68: Randnut von Basisgehäuse 11'
- 69: Innerer Nutabschnitt von Randnut 68
- 70: Äußerer Nutabschnitt von Randnut 68
- 71, 71': Umlaufende Ausnehmung
- 72: Seitenwand von Nutabschnitt 70
- 73: Radialnut
- 74: Randnut von Basisgehäuse 11'
- 75: Innerer Nutabschnitt von Randnut 74
- 76: Mittlerer Nutabschnitt von Randnut 74
- 77: Äußerer Nutabschnitt von Randnut 74
- 78: Ring
- 79: Seitenwand von Nutabschnitt 76
- A: Ausschnitt
- B: Ausschnitt

## Patentansprüche

1. Ventileinheit zur Druckmodulation in einer Druckluft-Bremsanlage, mit einem Einlassventil (6) und einem Auslassventil (7), die als Membranventile ausgebildet sind, und über die ein Bremsdruckausgang (4) mit einem Bremsdruckeingang (3) oder einem Entlüftungsausgang (5) verbindbar oder gegenüber diesem absperrbar ist, und mit zwei als 3/2-Wege-Magnetventile ausgebildeten Vorsteuerventilen (8, 9), über die jeweils eine an die Membran (17, 18) des zugeordneten Membranventils (6, 7) angrenzende Steuerkammer (31, 32) über eine Steuerdruckleitung (33, 34) mit einem Steuerdruck beaufschlagbar ist, wobei die Membranventile (6, 7) mit parallelen Betätigungsachsen (15, 16) radial benachbart in einem Ventilgehäuse (2) angeordnet sind, und die Membranen (17, 18) der Membranventile (6, 7) über jeweils einen in eine gehäuseseitige Ringnut ( 20', 21') eingelegten, axial vorsteuerventilseitig ausgerichteten Ringwulst (22, 23) zwischen zwei Gehäuseteilen (11', 14") eingespannt sind, wobei in der Ringnut (20', 21') oder unmittelbar angrenzend an die Ringnut (20', 21') mindestens eines Membranventils (6, 7) eine ringförmig umlaufende Ausnehmung (71, 71') zur Aufnahme von verdrängtem Wulstmaterial der betreffenden Membran (17, 18) angeordnet ist, **dadurch gekennzeichnet, dass** das von den Vorsteuerventilen (8, 9) abgewandte Gehäuseteil (11') jeweils eine abgestufte Randnut (68, 74) aufweist, deren radial innerer Nutabschnitt (69, 75) eine Stützscheibe (42) für die betreffende Membran (17) bündig aufnimmt, und deren benachbarter radial äußerer Nutabschnitt (70, 76) den Ringwulst (22) der Membran (17) axial sowie radial einseitig umfasst und eine ringförmig umlaufende radiale Ausnehmung (71, 71') begrenzt.

2. Ventileinheit nach Anspruch 1, **dadurch gekennzeichnet, dass** die Randnut (68) einfach abgestuft ist, und dass die ringförmig umlaufende radiale Ausnehmung (71) durch eine in der radialen Seitenwand (72) des radial äußeren Nutabschnittes (70) der Randnut (68) angeordnete Radialnut (73) gebildet ist.

3. Ventileinheit nach Anspruch 1, **dadurch gekennzeichnet, dass** die Randnut (74) zweifach abgestuft ist, und dass die ringförmig umlaufende radiale Ausnehmung (71') dadurch gebildet ist, dass ein zylindrischer Ring (78) in den radial äußeren Nutabschnitt (77) der Randnut (74) eingelegt ist, der die radiale Seitenwand (79) des mittleren Nutabschnittes (76) der Randnut (74) radial nach innen überragt.

## Claims

1. A valve unit for modulating pressure in a compressed air brake system, with an inlet valve (6) and an outlet valve (7) which are embodied as diaphragm valves, and via which a brake pressure output (4) can be connected to or shut off from a brake pressure input (3) or a vent output (5), and with two pilot valves (8, 9) embodied as 3/2 way solenoid valves, via which in each case a control chamber (31, 32) adjoining the diaphragm (17, 18) of the assigned diaphragm valve (6, 7) can be subjected to a control pressure via a control pressure line (33, 34), wherein the diaphragm valves (6, 7) are arranged with parallel actuation axes (15, 16) radially adjacent to each other in a valve housing (2), and the diaphragms (17, 18) of the diaphragm valves (6, 7) are each clamped between two housing parts (11', 14") via a ring bead (22, 23) inserted into a housing side ring groove (20', 21') and oriented axially on a pilot valve side, wherein in the ring groove (20', 21') or immediately adjacent to the ring groove (20', 21') of at least one diaphragm valve (6, 7) an annular circumferential recess (71, 71') is arranged to receive displaced bead material of the relevant diaphragm (17, 18), **characterized in that** the housing part (11') averted from the pilot valves (8, 9) respectively has a stepped edge groove (68, 74), the radial inner groove section (69, 75) of which flushly receives a support disk (42) for the relevant diaphragm (17), and the adjacent radial exterior groove section (70, 76) of which axially and radially comprises the ring bead (22) of the diaphragm (17) and limits an annular circumferential radial recess (71, 71').

2. The valve unit according to claim 1, **characterized in that** the edge groove (68) has a single step, and **in that** the annular circumferential radial recess (71) is formed by a radial groove (73) arranged in the radial lateral wall (72) of the radial exterior groove section (70) of the edge groove (68) .

3. The valve unit according to claim 1, **characterized in that** the edge groove (74) has two steps, and **in that** the annular circumferential radial recess (71') is formed **in that** a cylindrical ring (78) is inserted into the radial exterior groove section (77) of the edge groove (74), which protrudes through the radial lateral wall (79) of the central groove section (76) of the edge groove (74).

## Revendications

1. Unité soupape pour la modulation de pression dans un système de freinage à air comprimé, avec une soupape d'admission (6) et une soupape d'échappement (7), qui sont réalisées sous la forme de soupapes à membrane, et par l'intermédiaire desquelles une sortie de pression de freinage (4) peut être reliée à une entrée de pression de freinage (3) ou une sortie de ventilation (5) ou peut être obturée par rapport à celle-ci, et avec deux soupapes pilotes (8, 9) réalisées sous la forme d'électrovannes à 3/2 voies, par l'intermédiaire desquelles respectivement une chambre de commande (31, 32) adjacente à la membrane (17, 18) de la soupape à membrane (6, 7) associée peut être sollicitée avec une pression de commande par l'intermédiaire d'une conduite de pression de commande (33, 34), dans laquelle les soupapes à membrane (6, 7) sont disposées avec des axes d'actionnement (15, 16) parallèles de manière radialement voisine dans un carter de soupape (2), et les membranes (17, 18) des soupapes à membrane (6, 7) sont serrées entre deux parties de carter (11', 14") par l'intermédiaire de respectivement un bourrelet annulaire (22, 23) inséré dans une rainure annulaire (20', 21') côté carter, orienté axialement côté soupape pilote, dans laquelle un évidement (71, 71') annulairement périphérique pour la réception d'un matériau de bourrelet repoussé de la membrane (17, 18) concernée est disposé dans la rainure annulaire (20', 21') ou directement de manière adjacente à la rainure annulaire (20', 21') d'au moins une soupape à membrane (6, 7), **caractérisée en ce que** la partie de carter (11') opposée aux soupapes pilotes (8, 9) présente respectivement une rainure de bord (68, 74) étagée, dont la section de rainure (69, 75) radialement intérieure reçoit en affleurement un disque d'appui (42) pour la membrane (17) concernée, et dont la section de rainure radialement extérieure (70, 76) voisine comprend le bourrelet annulaire (22) de la membrane (17) unilatéralement axialement ainsi que radialement et délimite un évidement (71, 71') radial annulairement périphérique.

2. Unité soupape selon la revendication 1, **caractérisée en ce que** la rainure de bord (68) est étagée une fois, et que l'évidement (71) radial annulairement périphérique est formé par une rainure radiale (73) disposée dans la paroi latérale radiale (72) de la section de rainure radialement extérieure (70) de la rainure de bord (68).

3. Unité soupape selon la revendication 1, **caractérisée en ce que** la rainure de bord (74) est étagée deux fois, et que l'évidement (71') radial annulairement périphérique est formé par le fait qu'un anneau cylindrique (78) est inséré dans la section de rainure radialement extérieure (77) de la rainure de bord (74), qui fait saillie radialement vers l'intérieur de la paroi latérale radiale (79) de la section de rainure centrale (76) de la rainure de bord (74).
